# EUROPEAN PATENT APPLICATION

(11) **EP 3 910 246 A1**
(43) Date of publication of application: **17.11.2021**
(21) Application number: 20173951.3
(22) Date of filing: 11.05.2020
(51) Int. Cl.: F24C 15/20, B01D 45/08, F24C 15/32

(54) **FILTER FOR COOKING APPARATUS AND COOKING APPARATUS COMPRISING A FILTER**

(71) Applicant: Koninklijke Philips N.V., 5656 AG Eindhoven (NL)
(72) Inventor: FLOESSHOLZER, Hannes Uwe, 5656 AE Eindhoven (NL)
(74) Representative: Kapoor, Pavan Puneet

(57) **Abstract**

A filter (100) for filtering cooking juice particles from air circulating within a cooking apparatus (2) is provided. The filter is configured to be mounted on the cooking apparatus such that a base plate (102) of the filter is in a plane parallel with a plate direction (D_{P}), the plate direction having a component in a vertical direction, wherein the filter comprises: the base plate, wherein the base plate comprises one or more openings (104) for circulating air to pass through the filter, wherein the filter is shaped to create a tortuous path for the circulating air to pass though the openings, such that cooking juice particles entrained by the circulating air passing through the openings collect on the filter, wherein the filter comprises one or more channelling portions (108) extending in the plate direction, wherein the channelling portions form one or more surfaces for cooking juices, collecting on the filter to flow in the plate direction. A cooking apparatus comprising the filter is also provided.

## Description

### TECHNICAL FIELD

The present disclosure relates to filters for cooking apparatus.

### BACKGROUND

Some cooking apparatus, such as airfryers, cook food items, such as pieces of meat, fish, and vegetables, by circulating hot air around the food items. Such cooking apparatus typically comprise a fan for circulating the air and a heater for heating the air being circulated.

During cooking of food items, the food items often release cooking juices containing, amongst other things, water and fat. Additionally, when cooking particular food items, an amount of fat, such as vegetable oil, may be added with the food items, in order to improve the cooking result.

Particles of the cooking juices being released from the food items and/or present on the surfaces of the food items may become entrained in the flow of air being circulated around the cooking apparatus. cooking juices, particularly fat, which reaches the heater of the cooking apparatus may be heated to undesirable high temperatures leading to the production of smoke.

It is desirable to limit the amount of cooking juices being carried by the circulating air that reach the heater. Typically, cooking apparatus comprise heating elements located above the food items being cooked within the apparatus. In such cooking apparatus, a lid can be placed over the food items, and cooking juices collecting on the lid can drip down towards the bottom of the apparatus and away from the heater.

However, in cooking apparatus in which the heater is not located above the food items being cooked, restricting cooking juices from being carried to the heater by the circulating air can be more challenging.

### STATEMENTS OF INVENTION

According to an aspect of the present disclosure, there is provided a filter for filtering liquid particles, such as particles of cooking juices, from air circulating within a cooking apparatus. The filter may function as a separator, to separate particles of cooking juices, such as fat droplets from the air passing through the filter. The filter is configured to be mounted on the cooking apparatus such that a base plate of the filter is in a plane, e.g. a flat or curved plane, parallel with a plate direction, the plate direction having a component in a vertical direction, e.g. parallel with a vertical direction, wherein the filter comprises:
the base plate, wherein the base plate comprises one or more openings for circulating air to pass through the filter, wherein the filter is shaped to create a tortuous path for the circulating air to pass though the openings, e.g. comprising one or more bends or turns, and/or at least partially obstruct a portion of the opening, such that liquid particles entrained by the circulating air passing through the openings collect on the filter,
wherein the filter comprises one or more channelling portions, e.g. formed by portions of the base plate, extending in the plate direction, wherein the channelling portions form one or more surfaces for liquids, e.g. cooking juices, such as fat and/or water, collecting on the filter to flow, e.g. over the filter, in the plate direction.

Configuring the filter such that the base plate of the filter is to be mounted in the plate direction having a component in a vertical direction can be beneficial in cooking apparatus in which the heater is not located above the food being cooked, e.g. when the heater is location to one side of the food items. In particular, such arrangements can be more convenient to package within the apparatus and allow for an open space above the food items through which a user can see the food items being cooked. Furthermore, providing such a filter in a cooking apparatus having the heater located to one side of the food items being cooked limits restrictions in the airflow around the device, whilst reducing the amount of cooking juices that reach the heater, e.g. compared to a cooking apparatus not having such a filter.

The term cooking juices is used within this specification to refer to any liquids or mixtures of liquids that may be present within the cooking apparatus during cooking of food items and include solid particles that may be suspended in, precipitated from or condensed from any such liquids. In particular, cooking juices may refer to water and/or fat, e.g. released from the food item during cooking and/or added to the cooking apparatus to aid in the cooking process.

The filter may comprises one or more projecting plate portions projecting from the base plate at edges of respective openings in the base plate, wherein the one or more projecting plate portions project away from the plane of the base plate. The projecting plate portions may at least partially overlap the openings in a direction parallel with the plane of the base plate.

The projecting plate portions may create a tortuous path for the air circulating around the cooking apparatus to pass through the filter without reducing a flow area through the filter. By at least partially overlapping the openings in a direction parallel with the plane of the base plate, the projecting plate portions reduce a direct, straight line flow path that the liquid particles may follow from the food items through the filter.

The channelling portions may extend along edges of the openings. In particular, the channelling portions may extend along edges of the openings in the plate direction. One or more of the channelling portions of the base plate may be provided between a pair of the openings. One or more of the channelling portions may be provided between an opening and a projecting portion associate with an adjacent opening.

The channelling portions of the filter may be arranged to create one or more continuous surfaces for liquids to flow over from one of the openings, e.g. an upper most opening, to below another of the openings, e.g. a lower most opening of the filter. For example, the continuous surfaces formed by the channelling portions may extend from the one of the openings to to a lower edge of the filter. The channelling portion may thereby enable liquid to flow in the plate direction without passing over an opening in the base plate.

The filter may be configured to interact with an drip tray at a lower end of the filter, the drip tray for receiving liquid that has run down the filter. The drip tray may be integrally formed with the filter, e.g. with the base plate of the filter. Integrally forming the drip tray with the filter may facilitate removal of the filter and drip tray from the cooking apparatus for cleaning by the user. Further, when the filter and drip tray are integrally formed, the drip tray remains appropriately aligned with the channelling portions when the filter and/or drip tray are removed by the user and subsequently reinstalled.

The filter may comprise an upstream side and a downstream side, e.g. relative to the flow of air circulating through the openings. An opening into the drip tray may extend between the upstream and downstream side of the filter, such that liquid flowing over the upstream and downstream sides of the filter can enter the drip tray. When the drip tray is formed integrally with the base plate, an opening may be formed in the base plate at the opening into the drip tray so that liquid on both sides of the base plate can flow to the opening into the drip tray.

The channelling portions of the filter may be configured to create one or more continuous surfaces for liquid to flow over from one of the openings, e.g. an upper most opening, to the drip tray, e.g. to the opening of the drip tray.

The openings, and optionally the projecting plate portions, may extend principally in the plate direction. In arrangements in which the projecting plate portions extend principally in the plate direction, the projecting plate portions may form channelling portion, or further channelling portions, of the filter. Alternatively, the openings, and optionally the projecting plate portions, may extend principally in a direction perpendicular to the plate direction, e.g. in a lateral direction.

The openings may be spaced apart from one another in a direction perpendicular to the plate direction, e.g. a lateral direction of the filter. Each of the openings may be spaced apart from one another in the direction perpendicular to the plate direction, such that the openings do not overlap in the lateral direction of the filter. In this way, liquid particles gathering at an edge of one of the openings may flow down the base plate without passing over another of the openings.

The openings, and optionally the projecting plate portions, may be arcuate in the plane of the base plate. For example, the openings, and optionally the projecting plate portions may be crescent shaped. The openings may be symmetrically disposed on each lateral side of the filter.

According to another aspect of the present disclosure, there is provided a filter for filtering liquid particles, e.g. particles of cooking juices, from air circulating within a cooking apparatus, wherein the filter is configured to be mounted on the cooking apparatus such that a base plate of the filter is in a plane, e.g. a flat or curved pane, parallel with a plate direction having a component in a vertical direction, e.g. parallel with a vertical direction, wherein the filter comprises:
the base plate, wherein the base plate comprises one or more openings for circulating air to pass through; and
one or more projecting plate portions projecting from the base plate at edges of the respective openings in the base plate, wherein the one or more projecting plate portions project away from a plane of the base plate and are configured to at least partially overlap the openings in a direction parallel with the plane of the base plate,
wherein the base plate further comprises one or more channelling portions extending along edges of the openings in the plate direction, wherein the channelling portions are configured to create a path for liquid particles collecting on the filter to flow, e.g. over the filter, in the plate direction.

According to another aspect of the present disclosure there is provided a cooking apparatus comprising:
a chamber for receiving food items to be cooked;
an air mover arranged to one side of the chamber for circulating air around an interior of the cooking apparatus through the chamber;
a heater arranged to the one side of the chamber for heating the air circulated by the air mover; and
a filter mounted on the cooking apparatus between the chamber and the heater, the filter mounted such that a base plate of the filter is in a plane, e.g. a flat or curved pane, parallel with a plate direction having a component in a vertical direction, wherein the filter plate is shaped to create a tortuous path, e.g. comprising one or more bends or turns, for the circulating air to pass though the openings, such that liquid particles suspended within the circulated air collect on the filter, wherein the filter comprises one or more channelling portions extending along edges of the openings in the plate direction, wherein the channelling portions form one or more surfaces for liquid collecting on the filter to flow, e.g. over the filter, in the plate direction. The filter may be the above-mentioned filter.

The cooking apparatus may further comprise a drip tray arranged to receive fat flowing, e.g. over the filter, in the plate direction. An opening into the drip tray may be arranged relative to the filter such that liquid flowing over upstream and downstream surfaces of the filter, e.g. defined relative to the flow of circulating air, is received by the drip tray.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

### BRIEF DESCRIPTION OF THE DRAWINGS

For a better understanding of the present invention, and to show more clearly how it may be carried into effect, reference will now be made, by way of example, to the accompanying drawings, in which:
Figure 1 is a schematic sectional view of a cooking apparatus according to arrangements of the present disclosure;
Figures 2 is a front view of the filter and drip tray for the cooking apparatus depicted in Figure 1;
Figures 3a and 3b are front and sectional views respectively of a filter for a cooking apparatus according to arrangements of the present disclosure; and
Figures 4a and 4b are front and sectional views respectively of another filter for a cooking apparatus according to arrangements of the present disclosure.

### DETAILED DESCRIPTION

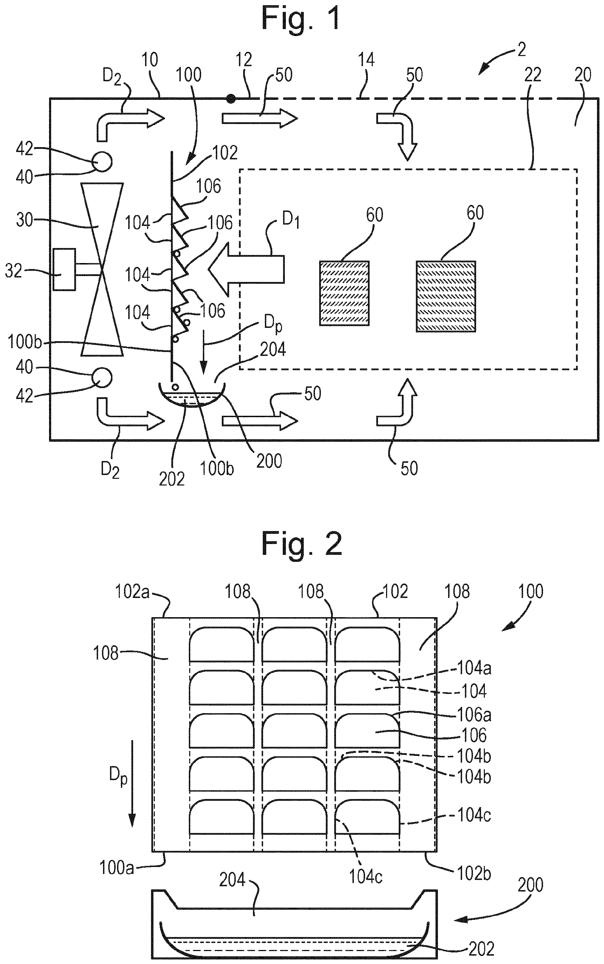

With reference to Figure 1, a cooking apparatus 2 according to the present disclosure comprises a housing 10. The housing 10 at least partially defines a cooking chamber 20 to receive food items 60 to be cooked. As depicted, the cooking chamber may be configured to receive a basket 22 within which the food items are contained during cooking. The basket 22 may be removable from the cooking chamber in order to facilitate the loading of food items into the basket 22.

The housing 10 may comprise a lid 12, which can be opened in order to place food items and/or the basket 22 into the cooking chamber. As depicted, a wall of the cooking chamber, such as an upper wall may be formed by the lid 12. In some arrangements, the lid may comprise a window 14 to enable a user to see the food items within the cooking chamber 20 when the lid 12 is closed, e.g. during cooking.

The cooking apparatus 2 further comprises an air mover 30, such as a fan. The air mover may be powered by an electric motor 32 provided within the housing 10. In the arrangement shown, the air mover 30 is arranged to one side of the cooking chamber 20. In other words, the air mover 30 may be at least partially aligned with the cooking chamber 20, e.g. with the food items within the cooking chamber, in a vertical direction of the cooking apparatus 2.

As depicted, the air mover 30 is arranged to draw air from the cooking chamber 20 in a first direction Di with a component, e.g. a principle component, in a lateral direction of the cooking apparatus into an inlet of the air mover 30, e.g. onto a leading edge of the fan. The first direction Di may be aligned with the lateral direction. The air mover 30 may be arranged to eject the air in one or more second directions D₂. For example in the arrangement shown, the air mover 30 is a fan configured to receive air in an axial direction of the fan and eject the air in a plurality of radial directions of the fan.

The housing 10 of the cooking device is configured to guide the air ejected from the air mover in the second directions D₂ to return to the cooking chamber 20, thereby circulating the air around the cooking apparatus 2. For example, the housing 10 may guide the air ejected by the air mover along an air circulation path 50, such that the air returns to the cooking chamber in a direction with a component, e.g. a principle component, in a vertical direction of the cooking apparatus. In some arrangements, the cooking apparatus 2 may comprise one or more air guiding structures provided within the housing 10 for guiding the air ejected from the air mover 30 to the cooking chamber 20. The air guiding structures may be mounted on or integrally formed with the housing 10.

The cooking apparatus 2 further comprises a heater 40. The heater 40 is configured to heat the air being circulated by the air mover so that the air enters the cooking chamber 20 at a desirable temperature for cooking the food items 60 within the cooking chamber. The heater 40 may comprise one or more heating elements 42, such as resistive heating elements, which may be arranged in the flow of air being ejected by the air mover 30. As depicted, the heater 40 may be arranged to the one side of the cooking apparatus, e.g. adjacent to the air mover 30. In one or more arrangements, the heater 40 may comprise one or more heating element 42 extending in a circular shape about the air mover 30, such that air leaving the air mover in the second directions D₂ passes over the heating element 42. It will be appreciated that in other arrangements the heater 40 may have a different configuration and/or may be located in a different location in the cooking apparatus 2.

During cooking of the food items, the food items may release, and/or have on their surfaces, liquids, e.g. cooking juices, containing, in particular, water and fat. Particles, e.g. droplets, of the cooking juices may become entrained within the flow of air being circulated around the cooking apparatus. Particles of the cooking juices that travel from the cooking chamber 20 to reach the heater 40 may be heated to undesirably high temperatures. In the case particles containing fat, the particles being heated by the heater may lead to the production of smoke, which is undesirable.

In order to restrict, e.g. limit, particles of cooking juices reaching the heater 40, the cooking apparatus further comprises a filter 100 according to arrangements of the present disclosure. The filter 100 comprises a base plate 102 comprising one or more openings 104 for the circulating air to pass though the filter. The cooking apparatus 2 may be configured such that substantially all of the air circulating from the cooking chamber 20 to the air mover 30 and heater 40 pass though the openings 104 in the filter 100.

As described above, the air mover 30 is arranged to draw air from the cooking chamber 20 in the first direction Di having a component in a lateral direction of the cooking apparatus. Accordingly, the filter 100 is mounted, e.g. removably mounted, on the cooking apparatus such that the base plate is in a plane, e.g. a flat or curved plane, parallel with a plate direction D_{P} that has a component in a vertical direction of the cooking apparatus. In this way, the openings 104 are formed in the base plate to define a flow area through the openings in a direction with a horizontal component. As depicted in Figure 1, the filter 100 may be mounted on the cooking apparatus such that a principle, e.g. greatest, component of the plate direction is in a vertical direction. For example, the filter may be mounted such that the base plate 102 is in a vertical plane. In other words, the plate direction D_{P} may be parallel with the vertical direction.

The filter 100 is configured to create a tortuous path, e.g. a flow path comprising one or more bends or turns, for the air circulating around the cooking apparatus 2 to pass through the openings 104 in the base plate 102. In particular, the filter 100 may comprise one or more projecting plate portions 106 that projecting from the base plate 102. The projecting plate portions 106 may project form the base plate 102 at edges of respective openings in the base plate. As depicted, the one or more projecting plate portions may project away from the plane of the base plate, e.g. at an angle relative to the plane of the base plate. The projecting plate portions may thereby form one or more slats or louvres in the filter, thereby creating the tortuous path for the circulating air. As depicted, the projecting plate portions 106 at least partially overlap the openings in a direction parallel with the plane of the base plate, thereby reducing areas of the openings through which particles of cooking juice travelling directly towards the openings, e.g. not following the tortuous path, can pass through.

The liquid particles, e.g. of cooking juices, entrained within the air have a greater inertia than the air particles, and hence, may be less able to follow the tortuous path though the openings 104, resulting in the particles of cooking juices colliding with the filter, e.g. with the base plate 102 or the projecting plate portions 106, as the circulating air passes through the openings 104.

With reference to Figure 2, the filter 100 comprises one or more channelling portions 108. The channelling portions 108 may extend along edges of the openings in the plate direction D_{P} and form one or more surfaces for cooking juices that have collected on the filter to flow over the filter in the plate direction D_{P}, e.g. with at least a component vertically downwards.

As depicted in Figure 2, one or more of the channelling portions 108 may be provided between pairs of the openings, e.g. in a direction perpendicular to the plate direction D_{P}. Additionally or alternatively, one or more of the channelling portions may be provided between one of the openings and an edge of the plate, e.g. a lateral edge.

The channelling portions 108 may be configured to form a continuous surface for the cooking juices to flow over from one of the openings, e.g. an uppermost one of the openings to, e.g. to a position below, another of the openings, e.g. a lowermost one of the openings. As depicted in Figure 2, the channelling portions 108 may be configured to form a continuous surface for the cooking juices to flow over from one of the openings, e.g. an uppermost one of the openings, or an upper end 102a of the base plate, to a lower end 102b of the base plate, e.g. in the plate direction D_{P}.

The base plate 102 may comprise a plurality of openings 104 and associated projecting plate portions 106. As depicted in Figure 2, the openings may extend principally in a lateral direction of the plate, e.g. a direction perpendicular to the plate direction D_{P}. The projecting plate portions 106 may project from upper edges 104a of the openings. As shown, upper corners 104b of the openings 104 may be rounded. The projecting plate portions 106 may be attached to, e.g. project from, the base plate at least partially around one or both of the upper corners 104b of the openings to lateral edges of the openings. In this way, the projecting plate portions 106 may comprise arcuate portions 106a between upper and lateral edges of the projection plate portions, which may act to guide cooking juices that collect above the projecting plate portions 106 to the lateral side of the projecting plate portions 106, e.g. to the channelling portions 108.

Referring to Figures 1 and 2, the cooking apparatus 2 may further comprise a drip tray 200. The drip tray 200 may be mounted, e.g. removably mounted, on the cooking apparatus 2 below, e.g. vertically below, the filter 100. The drip tray may be arranged relative to the filter 100 so that the drip tray catches drips of cooking juices that have run down the filter 100 to the lower end 100a of the filter before dripping on the filter. In particulate, the drip tray may be aligned with the channelling portions 108. As shown in Figure 1, the drip tray 200 may be arranged relative to the filter such at an opening 204 into the drip tray reservoir 202 overlaps an upstream and downstream side 100b, 100c of the filter 100 and the lower 100a, so that the drip tray is able to receive cooking juices flowing down the upstream and downstream sides of the filter. Additionally, the drip tray 200 may extend as far as or further than the projecting plate portions 106, e.g. lower edges of the projecting plate portions, from the plane of the base plate 102, so that the drip tray is able to receive cooking juices dripping from the projecting plate portions 106.

In the arrangement depicted in Figure 2, the filter 100 comprises a plurality of openings 104 and associated projecting plate portions 106 spaced apart from one another in the plate direction D_{P} and the direction perpendicular to the plate direction to form a grid of openings and associated projecting plate portions.

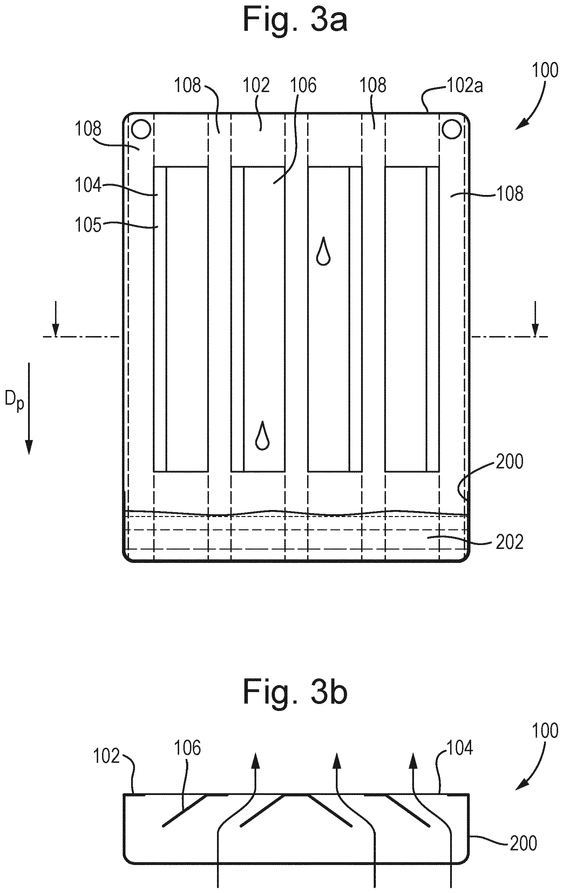

With reference to Figure 3a and 3b, in another arrangement of the disclosure, the filter 100 comprises openings 104 that are spaced apart from one another in a lateral direction of the plate, e.g. perpendicular to the plate direction D_{P}. The openings 104 may be spaced apart from one another such that the openings do not overlap in the lateral direction of the plate, e.g. perpendicular to the plate direction D_{P}.

As depicted in Figure 3a, the openings 104 and associated projecting plate portions 106 may have a length greater than half the length of the base plate in the plate direction Di. In such arrangements, the projecting plate portions may form continuous surfaces for the cooking juices to flow over the filter in the plate direction D_{P}. In other words, the projecting plate portions 106 may from channelling portions, or further channelling portions.

As shown in Figure 3a, in some arrangements, the projecting plate portions may not completely overlap the openings, in the plane of the base plate 102, such that a gap 105 is provided between a free edge of the projecting plate portion 106 and an adjacent edge of the opening in the plane of the base plate 102.

In some arrangements, such as the arrangements shown in Figures 3a and 3b, the drip tray 200 may be integrally formed with the filter. For example, the drip tray may be formed integrally with the base plate 102, e.g. at a lower end of the base plate. The drip tray 200 may be formed such that cooking juices flowing down the filter, e.g. down the channelling portions, enter a reservoir 202 formed by the drip tray. The base plate 102 may form a wall of the drip tray reservoir. In this way, cooking juices flowing down the filter can enter the drip tray reservoir without detaching from the base plate. In such arrangements, the channelling portions 108 of the base plate may extend from one of the openings, e.g. an uppermost one of the openings, or the upper end 102a of the base plate to the drip tray 200, e.g. the reservoir 202 of the drip tray.

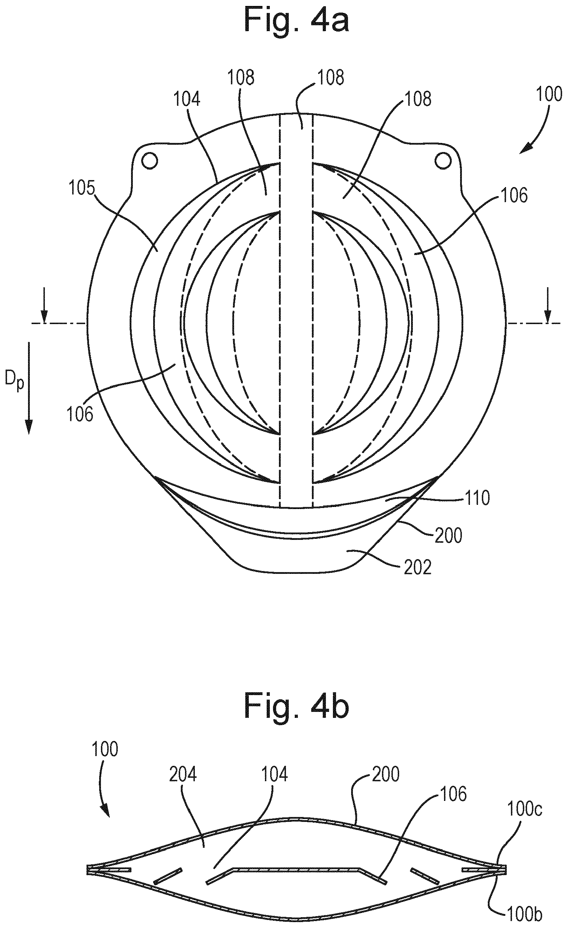

With reference to Figures 4a and 4b, in one or more arrangements, the openings 104 in the base plate 102 may be arcuate. Additionally, the projecting plate portions 106 may be arcuate. For example, as depicted in Figure 4a, the openings may be crescent shaped. The crescent shaped openings may extend principally in the plate direction D_{P}. The openings 104 may be symmetrically arrange don opposing lateral sides of the base plate. Two or more of the arcuate openings may be disposed of either lateral side of the plate. Successive ones of the openings disposed a greater distance from a centre of curvature the openings, or from the centre of the base plate 102, may have a greater radius of curvature, such that the arcuate openings further from the centre extend about the arcuate openings closer to the centre.

In such arrangements, one of more of the channelling portions 108 may be arcuate. In particular, the channelling portions 108 formed between, e.g. laterally between, pairs of the arcuate openings 104.

As depicted in Figures 4a and 4b, in one of more arrangements, the filter 100 may be configured such that an opening 204 into the drip tray reservoir 202 extends between upstream and downstream sides 100b, 100c of the filter. In this way, liquid, e.g. cooking juices flowing down either the upstream or downstream sides of the filter may enter the drip tray 200. As depicted in Figure 4a, an aperture 110 may be formed in the base plate above, e.g. vertically above the drip tray opening, to enable the drip tray opening 204 to extend between the upstream and downstream sides of the base plate 102.

It will be appreciated by those skilled in the art that although the invention has been described by way of example, with reference to one or more exemplary examples, it is not limited to the disclosed examples and that alternative examples could be constructed without departing from the scope of the invention as defined by the appended claims.

## Claims

1. A filter (100) for filtering cooking juice particles from air circulating within a cooking apparatus (2), wherein the filter is configured to be mounted on the cooking apparatus such that a base plate (102) of the filter is in a plane parallel with a plate direction (D_{P}), the plate direction having a component in a vertical direction, wherein the filter comprises:
the base plate, wherein the base plate comprises one or more openings (104) for circulating air to pass through the filter, wherein the filter is shaped to create a tortuous path for the circulating air to pass though the openings, such that cooking juice particles entrained by the circulating air passing through the openings collect on the filter,
wherein the filter comprises one or more channelling portions (108) extending in the plate direction, wherein the channelling portions form one or more surfaces for cooking juices, collecting on the filter to flow in the plate direction.

2. The filter (100) of claim 1, wherein the filter comprises one or more projecting plate portions (106) projecting from the base plate (102) at edges of respective openings (104) in the base plate, wherein the one or more projecting plate portions project away from the plane of the base plate.

3. The filter (100) of claim 2, wherein the projecting plate portions (106) at least partially overlap the openings (104) in a direction parallel with the plane of the base plate.

4. The filter (100) of any of claims 1 to 3, wherein one or more of the channelling portions (108) are provided between a pair of the openings (104) and/or projecting plate portions (106).

5. The filter (100) of any of claims 1 to 4, wherein the channelling portions (108) of the filter are arranged to create one or more continuous surfaces for cooking juices to flow over from one of the openings (104) to below another of the openings.

6. The filter (100) of any of claims 1 to 5, wherein the filter is configured to interact with a drip tray (200) at a lower end of the filter, the drip tray for receiving cooking juices that have flowed down the filter.

7. The filter (100) of claim 6, wherein the drip tray (200) is integrally formed with the filter.

8. The filter (100) of claims 6 or 7, wherein the filter comprises an upstream side (100a) and a downstream side (100b), wherein an opening (204) into the drip tray (200) extends between the upstream and downstream side of the filter such that cooking juices flowing over the upstream and downstream sides of the filter can enter the drip tray.

9. The filter (100) of any of claims 6 to 8, wherein the channelling portions (108) of the filter are configured to create one or more continuous surfaces for cooking juices to flow over from one or more of the openings (104) to the drip tray (200).

10. The filter (100) of any of the preceding claims, wherein the openings (104) extend principally in the plate direction (D_{P}).

11. The filter (100) of any of the preceding claims, wherein the openings (104) are spaced apart from one another in a lateral direction of the filter.

12. The filter (100) of any of the preceding claims, wherein the openings are arcuate in the plane of the base plate (102).

13. A cooking apparatus (2) comprising:
a chamber (20) for receiving food items (60) to be cooked;
an air mover (30) arranged to one side of the chamber for circulating air around an interior of the cooking apparatus through the chamber;
a heater (40) arranged to the one side of the chamber for heating the air circulated by the air mover; and
a filter (100) mounted on the cooking apparatus between the chamber and the heater, the filter mounted such that a base plate (102) of the filter is in a plane parallel with a plate direction (D_{P}) having a component in a vertical direction, wherein the filter plate is shaped to create a tortuous path for the circulating air to pass through the openings, such that cooking juice particles suspended within the circulated air collect on the filter, wherein the filter comprises one or more channelling portions (108) extending along edges of the openings in the plate direction, wherein the channelling portions form one or more surfaces for cooking juices collecting on the filter to flow in the plate direction.

14. The cooking apparatus (2) of claim 13 further comprising a drip tray (200) arranged to receive cooking juices flowing in the plate direction (D_{P}).

15. The cooking apparatus (2) of claim 14, wherein an opening (204) into the drip tray is arranged relative to the filter (100) such that cooking juices flowing over upstream and downstream surfaces (100a, 100b) of the filter are received by the drip tray (200).
